# FASCICULE DE BREVET EUROPEEN

(11) **EP 1 263 796 B1**
(45) Date de publication et mention de la délivrance du brevet: **15.02.2006**
(21) Numéro de dépôt: 00990061.4
(22) Date de dépôt: 19.12.2000
(51) Int. Cl.: C08F 2/16, C08F 4/00, C08F 291/00, C08F 265/04, C09J 151/00

(54) **PROCEDE DE PREPARATION DE LATEX AYANT UN HAUT EXTRAIT SEC, UNE FAIBLE VISCOSITE ET PRESENTANT UNE DISTRIBUTION BIMODALE**
HERSTELLUNGSVERFAHREN VON EINEM LATEX MIT HOHEM FESTSTOFFGEHALT, MIT EINER NIEDRIGEN VISKOSITÄT UND EINE EINER BIMODALEN VERTEILUNG
PROCESS FOR PREPARING A LATEX WITH HIGH NON-VOLATILE MATTER CONTENT, LOW VISCOSITY AND HAVING A BIMODAL DISTRIBUTION

(30) Priorité: 27.12.1999 FR 9916520
(43) Date de publication de la demande: 11.12.2002
(73) Titulaire: Arkema, 92800 Puteaux (FR)
(72) Inventeur: BETREMIEUX, Isabelle, F-60580 Coye La Foret (FR); LOYEN, Karine, F-Pont-Audemer (FR); MEESCHAERT, Nathalie, F-69230 Saint-Genis Laval (FR); NOGUES, Pierre, F-27300 Bernay (FR); SCHNEIDER, Martine, F-13500 Martigues (FR)
(74) Mandataire: Chaillot, Geneviève
(86) Numéro de dépôt international: PCT/FR2000/003587
(87) Numéro de publication internationale: WO 2001/048026

(56) Documents cités:
- EP-A- 0 953 604
- GB-A- 1 419 145
- GB-A- 2 055 387
- US-A- 4 395 500
- US-A- 4 456 726

## Description

L'invention se rapporte au domaine des latex à haut extrait sec et à faible viscosité et en particulier aux latex contenant des particules de polymères dispersés selon une répartition granulomètrique bimodale. Elle concerne un procédé de synthèse de tels latex.

Selon l'invention par latex à haut extrait sec on entend les dispersions aqueuses de particules de polymères contenant au moins 55% en poids desdites particules.

La synthèse de latex à haut extrait-sec, pose bien souvent des problèmes de viscosité. En effet, à ces extrait-secs, la viscosité atteint des valeurs très élevées ce qui pose des problèmes d'agitation pendant le procédé de synthèse et également des problèmes d'applications.

Pour obtenir à la fois de hauts extrait-secs et de faibles viscosités, il est bien connu que la granulométrie des latex doit respecter certaines règles (voir à ce sujet en particulier Woods, M.E., Krieger, I. M., J. Colloid Interface Sci., 34, 91 (1970), Johnson, P. H., Kesley, R. H., Rubber World, 138, 877 (1958), England, D., Kay, M., J. Colloid and Interface Sci., 34, 249, (1970)), telles que :
- A extrait-sec identique un latex de grosse taille de particules est plus fluide qu'un latex de faible taille de particules
- Un latex composé d'un mélange de deux populations de particules est plus fluide qu'un latex composé d'une seule population de particules à condition que les petites particules ne représentent pas plus de 30 à 20% de la fraction volumique des particules et que le rapport de taille entre les grosses particules et les petites particules soit suffisamment élevé.
- Un latex composé de deux populations de particules est plus visqueux qu'un latex composé de trois population, à condition que les critères de concentration et de différences de tailles décrits précédemment soient respectés.

En résumé, préparer un latex ayant à la fois un haut extrait sec et une faible viscosité reste un problème délicat. Cependant des nombreux documents ont tenté de le résoudre. Ainsi, EP 568834A1, EP814103A2, EP818471A1 et WO9816560 décrivent l'utilisation de dispersions semences de granulométrie différentes qui sont introduites au départ ou pendant la synthèse, ces semences grossissent lors de la coulée de monomères et d'amorceurs hydrosolubles, ce qui permet d'obtenir des granulométries finales qui conduisent à un bon compromis extrait-sec/viscosité.

Dans la demande EP814096, des produits à extrait-sec élevé et faible viscosité sont obtenus grâce à un procédé en une seule étape moyennant l'utilisation d'un cosolvant miscible à l'eau introduit dans la pré émulsion de monomères.

Dans la demande WO9807767, des produits à extrait-sec élevé et faible viscosité sont obtenus grâce à un procédé en une seule étape moyennant une quantité d'inhibiteur très faible par rapport au monomères (<50 ppm) et des débits d'introduction de la pré émulsion de monomères qui augmentent progressivement dans le temps.

DE 19727060 décrit un procédé de production de dispersions aqueuses de polymères ayant une répartition granulomètrique essentiellemnt monomodale et un diamètre supérieur à 400nm par la polymérisation en émulsion à l'aide de deux systèmes d'amorçage dont le premier est un système redox, en présence de 0.01. à 2 % en poids du poids total semence et monomères, d'une semence de diamètre compris entre 10 et 100 nm.

Le problème principal que cherche à résoudre l'invention est l'obtention d'un latex à distribution bimodale adéquate par un procédé de polymérisation simple et facilement contrôlable.

En effet, la demanderesse a trouvé qu'un latex bipopulé peut présenter un bon compromis extrait-sec / viscosité, s' il est composé d'une population de grosses particules dont la taille est supérieure à 500nm et d'une population de petites particules dont la taille est inférieure à 250nm. Le compromis extrait sec/viscosité est encore meilleur si le rapport diamètre moyen grosses particules/diamètre moyen petites particules est supérieur à 3, de préférence supérieur à 4

Or il est bien connu de l'homme du métier qu'il est difficile en polymérisation en émulsion d'obtenir des grosses tailles de particules (>450 nm) avec des temps de fabrication courts et surtout en présence de particules de taille plus faible. La présente invention propose une solution à ce problème basée sur l'emploi de systèmes d'amorçage spécifiques combinant des amorceurs hydrosolubles et des amorceurs liposolubles.

La demanderesse a trouvé que les problèmes précédemment évoqués peuvent être résolus par la polymérisation en émulsion en présence d'une semence ayant un diamètre moyen bien défini. La polymérisation étant amorcée par un mélange de deux systèmes d'amorçage l'un hydrosoluble et l'autre liposoluble.

L'avantage de cette invention par rapport à l'art antérieur utilisant des semences est que grâce à l'utilisation de systèmes d'amorçage mixte hydrosoluble/liposoluble, le grossissement de populations de taille différentes provenant de semences devient plus facile à contrôler. Pour cela, il suffit de solubiliser de l'amorceur liposoluble dans une des populations pour favoriser sa croissance au détriment de celle des autres. Ceci est particulièrement avantageux, puisque dans le cas d'un mélange de petites et de grosses particules, avec un amorçage hydrosoluble, classique en polymérisation en émulsion, il est difficile de faire croître des grosses particules. En effet, dans ce cas, la plupart des monomères sont consommés par les petites particules parce qu'elles ont une surface de capture plus importante. Ce phénomène est d'autant plus gênant que pour obtenir une viscosité très faible à un extrait-sec élevé, il est nécessaire (voir précédemment) d'obtenir une concentration volumique en grosses particules, supérieure à 75% et mieux supérieure à 80%.

De plus la solution proposée par la demanderesse ne nécessite pas l'emploi de cosolvant générateur de produits volatils lors de l'utilisation du latex et qu'elle ne nécessite pas non plus la présence d'inhibiteur dans les monomères, ce qui la rend bien plus intéressante d'un point de vue sécurité sur une installation industrielle.

Un des objets de l'invention est un latex constitué d'une dispersion aqueuse contenant au moins 55% en poids de particules de polymères réparties de la manière suivante :
A - de 5 à 30% en poids ont un diamètre moyen compris entre 100 et 250 nm,
B - de 75 à 95 % en poids ont un diamètre moyen supérieur à 500 nm
C - de 0 à 5% en poids ont un diamètre moyen compris entre 250 et 500nm
D - de 0 à 5 % en poids ont un diamètre moyen inférieur à 100nm.

Le rapport diamètre moyen des particules B (dB) / diamètre moyen des particules A (dA) est compris entre 3 et 10 et de préférence supérieur à 4

Selon une forme préférentielle le latex de l'invention renferme de 10 à 25% en poids de particules (A) et de75 à 90 % de particules (B).

En réduisant au minimum la quantité des particules A, C et D le latex de l'invention dévient un latex essentiellement monomodale ayant un diamètre moyen supérieur à 500nm.

Un autre des objets de l'invention est un procédé d'obtention de latex tel que celui décrit précédement basé sur la croissance contrôlée d'une ou d'un mélange de populations de particules, obtenus soit par l'introduction de semences soit par renucléations successives au cours d'une même séquence de fabrication. La rénucléation permet, à différents stades de la polymérisation, de fabriquer des particules de polymères à faible taille.

Les populations de particules sont donc obtenues soit par ajout de semence de tailles différentes au début et/ou pendant le procédé de polymérisation en dispersion aqueuse soit par nucléation micellaire ou coagulative, provoquée à différents moments du procédé de synthèse, en fonction des quantités et de la nature des tensio-actifs introduits mais également de la nature des monomères comme il est connu par l'homme de l'art.

La polymérisation étant assurée par un système mixte d'amorçeurs hydrosoluble liposoluble.

Le procédé de l'invention est réalisé par la polymérisation en émulsion à une température comprise entre 30 et 90°C d'au moins un monomère éthyleniquement insaturé, en présence d'au moins un tensio actif, de 5 à 25 % en poids par rapport au poids total des polymères d'une semence constitué de particules de polymères de diamètre moyen compris entre 200 et 450 nm.

La semence pouvant être introduite en début de polymérisation ou au cours de la polymérisation mais avant d'atteindre la polymérisation de 80% des monomères à polymériser.

La semence pouvant être introduite soit sous la forme d'un latex, soit sous la forme d'une poudre redispersible ou bien préparée in situ par la polymérisation en émulsion.

Les systèmes d'amorçages mixtes choisis permettent ensuite de faire croître les particules pour obtenir la granulométrie finale du latex qui conduira aux propriétés rhéologiques et applicatives souhaitées.

Les systèmes d'amorçages mixtes sont constitués d'un ou de plusieurs systèmes d'amorceurs hydrosolubles et d'un ou plusieurs amorceurs liposolubles qui peuvent être introduits de façon simultanée au cours du procédé de synthèse ou selon des séquences bien définies. Le système mixte peut être constitué d'un rapport molaire entre l'amorceur hydrosoluble et l'amorceur liposoluble compris entre 0,01/1 et 1/0,01.

Les amorceurs hydrosolubles sont les amorceurs couramment utilisés en polymérisation en émulsion, parmi lesquels, on peut citer:
Les persulfates de sodium, potassium et ammonium
Les dérivés azoïques hydrosolubles tels que l'acide 4,4'-Azobis-4-cyanovalérique ou le dihydrochlorure 2,2'-Azobis-2amidinopropane par exemple.

Les systèmes mettant en jeu un réducteur, un oxydant et parfois même un activateur. Les oxydants sont le plus souvent des hydroperoxydes tels que l'eau oxygénée, le ter-butyl hydroperoxyde, le ter-amyl hydroperoxyde, l'hydroperoxyde de cumyle, le sel de sodium du mélange de m- et p- diisopropyl benzène dihydroperoxyd. Les réducteurs les plus couramment employés sont le formaldéhyde sulfoxylate de sodium, le métabisulfite de sodium, l'acide ascorbique. Les activateurs sont le plus souvent des sels métalliques tels que le sulfate de fer ,le sulfate de cuivre ou l'acétate de cobalt.

Les amorceurs liposolubles sont choisis en fonction de leur solubilité dans le mélange de monomères à polymériser et du polymère correspondant. II s'agit de peroxydes, d'hydroperoxydes insolubles dans l'eau, de peroxyesters, de peroxydicarbonates ou encore de dérivés azoïques liposolubles tels que l'azobisisobutyronitrile, l'azobiisobutyrodiméthyl ester ou l'azobiisobutyrodiéthyl ester. Ces derniers seront d'ailleurs préférentiellement utilisés quand il s'agira de polymériser un mélange de monomères qui contient une forte proportion de dérivés acryliques ou méthacryliques en raison de leur grande solubilité dans ces mélanges de monomères et de leur polymère. Parmi les amorceurs azoïques l'azobisisobutyrodiéthyl ester est souvent choisi en raison de son état liquide à température ambiante qui facilite sa manipulation.

Dans le cas des amorceurs liposolubles présentant des températures de décomposition élevées, il peut également être nécessaire d'utiliser des réducteurs tels que décrits dans le cadre des amorceurs hydrosolubles pour activer la réaction de polymérisation. Un composé métallique peut avantageusement augmenter les vitesses d'amorçage.

Les autres éléments importants de la formulation sont comme pour toute polymérisation en dispersion aqueuse les tensio-actifs et les monomères.

En ce qui concerne les tensio-actifs, leur nature et leur taux sont à optimiser en fonction de la granulométrie souhaitée et également de la nature des monomères à polymériser. En général, on préfère utiliser un mélange de tensio-actifs anionique et non ionique. Les anioniques sont choisis, par exemple, parmi les ethers d'alkylaryle sulfate, les éthers d'alkyle sulfates. Les non ioniques sont choisis parmi les alkyls phénol éthoxylés ou les alcools gras éthoxylés.

Le taux de tensio-actif utilisé dépend du procédé. En effet, d'une façon générale s'il s'agit de faire grossir des particules déjà présentes, il est plus avantageux d'utiliser principalement un tensio-actif non-ionique. En revanche, s'il s'agit de nucléer une population de particules, il est intéressant d'utiliser du tensio-actif anionique.

Le principe de cette invention est général, cependant la semence de grosses particules ou les grosses particules générées in situ sont composées majoritairement de monomères acrylique ou méthacryliques en raison de la bonne solubilité de la plupart des amorceurs liposolubles dans ces monomères et leurs polymères. Pour l'étape ultérieure de croissance des particules et de renucléation d'une ou plusieurs populations de particules plus petites, les monomères utilisés ne sont pas forcément les mêmes que ceux qui sont utilisés pendant la préparation de la semence et peuvent être aussi bien la famille des acryliques et méthacryliques que des monomères vinyliques comme par exemple le chlorure de vinyle, le fluorure de vinylidène, l'acétate de vinyle ou des monomères styrèniques.

En ce qui concerne le procédé de polymérisation, que ce soit en présence de semence ou non, les monomères sont introduits dans le réacteur en continu avec une vitesse d'addition proche de leur vitesse de consommation.

Le procédé préféré consiste à préparer une semence de grosses particules majoritairement acrylique in situ ou ex situ, à la faire gonfler par un mélange de monomères et d'amorceur liposoluble, de continuer la croissance de ces grosses particules en ajoutant en continu une pré émulsion de monomères et un ou plusieurs amorceurs hydro et liposoluble, de créer une ou plusieurs population de petites particules par renucléation en présence de tensio-actif ou par injection d'une deuxième semence de petite taille.

On a vu précédemment que le choix des amorceurs est un élément clef de l'invention, le moment et la façon dont ils sont introduits constituent des paramètres tout aussi importants.

En effet, on choisira d'introduire l'amorceur liposoluble en batch ou en coulée aux moments du procédé où l'on souhaite faire croître les grosses particules sans renucléer de petites particules. En revanche l'amorceur hydrosoluble pourra être introduit de préférence quand on souhaite renucléer des petites particules où faire croître ces dernières au détriment des plus grosses. On introduira l'amorceur hydrosoluble et l'amorceur liposoluble en parallèle quand il s'agit de faire croître un mélange de grosses et de petites particules à des vitesses équivalentes.

L'amorceur liposoluble peut être introduit de plusieurs façons ; la façon préférée consiste à le solubiliser dans la semence de grosses particules, cependant il est également possible de l'introduire en continu dans le procédé en le dissolvant dans la pré émulsion de monomères ou sous forme d'émulsion ou dispersion stabilisée par un mélange de tensio-actifs et/ou de colloïdes protecteurs comme décrit dans les brevets FR 7412907, EP 010986, FR 7607124.

L'amorceur hydrosoluble est introduit sous forme de solution aqueuse en batch ou en coulée comme il est connu par l'homme du métier.

Les températures de polymérisation sont comprises entre 30 et 90°C, en fonction du système d'amorçage choisi.

Une étape d'élimination des monomères résiduels peut être effectuée en fin de coulée des monomères soit par un palier de température soit par l'introduction d'amorceurs de polymérisation, les étiquettes ou les adhésifs pour revêtement de sol.

Les exemples suivants illustrent l'invention. Les latex susceptibles d'être obtenus, suivant le procédé défini ci-dessus peuvent être appliqués comme adhésifs telles que les adhésifs sensibles à la pression, utilisés pour encoller.

### Exemples :

Les tailles de particules sont mesurées par chromatographie liquide capillaire séparative à l'aide de l'appareil CHDF 2000, fourni par Matec Applied Science.

La viscosité est mesurée au Brookfield selon la norme ISO 2555

### Exemple 1 : Synthèse de la dispersion semence

Dans un réacteur en verre double enveloppe muni d'une agitation mécanique de type ancre, sont introduits 1358.4 g d'eau, 10.0 g d'une solution aqueuse à 30 %de sulfate de nonyl phénol éthoxylé à 32 OE, 10.0 g d'une solution aqueuse à 65% de nonyl phénol éthoxylé à 30 OE et 41.5 g d'acétate de sodium trihydraté. Le contenu est porté à 80°C sous agitation. 327.3 g de la préémulsion de monomères et 7.6 g de la solution de persulfate de sodium sont ajoutés en batch à cette température. 10 minutes plus tard le reste de la pré émulsion est introduit en continu dans un temps de 5 h à 80°C, alors que le reste de la solution de persulfate de sodium est introduit séparément en 5h30.

**Pré émulsion de monomères :**

| | |
|---|---|
| Eau | 2567.6 g |
| Sulfate de nonylphénol éthoxylé à 30% dans l'eau | 376.7 g |
| Nonyl phénol éthoxylé à 65% dans l'eau | 145.7 g |
| Méthacrylate de méthyle | 800.0 g |
| Acrylate de 2-éthyle hexyle | 8100.0 g |
| Acétate de vinyle | 800.0 g |
| Acide acrylique | 300.0 g |

**Solution de persulfate de sodium :**

| | |
|---|---|
| Eau | 272.0 g |
| Persulfate de sodium | 35.0 g |

La semence résultante de cet exemple à un extrait-sec de 65.6 % et une taille de particules de 410 nm.

### Exemple 2: Synthèse de latex bipopulé en présence d'un amorçage mixte : persulfate/DEAB

Le DEAB est l'azobisisobutyrodiéthyl ester

Dans un réacteur en verre double enveloppe muni d'une agitation mécanique de type ancre, sont introduits 207.4 g d'eau, 376.0 g de la semence synthétisée dans l'exemple I-1 et 30.0 g d'une solution de monomères et d'amorceur liposoluble. Le contenu est porté à 80°C sous agitation. La totalité de la pré émulsion de monomères est introduite en continu dans un temps de 4 h à 80°C, alors que le reste de la solution de persulfate de sodium est introduit en 4h30.
2h30 après le début de la coulée de la pré émulsion de monomères 51.9 g d'une solution de tensio-actif sont ajoutés en batch dans le réacteur

**Solution de monomères et d'amorceur liposoluble :**

| | |
|---|---|
| Méthacrylate de méthyle | 2.2 g |
| Acétate de vinyle | 2.2 g |
| Acrylate de 2-éthyl hexyle | 22.4 g |
| Acide acrylique | 0.8 g |
| DEAB | 2.4 g |

**Pré émulsion de monomères :**

| | |
|---|---|
| Eau | 168.3 g |
| Sulfate de nonylphénol éthoxylé à 30% dans l'eau | 23.4 g |
| Nonyl phénol éthoxylé à 65% dans l'eau | 14.0 g |
| Méthacrylate de méthyle | 74.6 g |
| Acétate de vinyle | 74.6 g |
| Acrylate de 2-éthyl hexyle | 755.2 g |
| Acide acrylique | 28.0 g |
| DEAB | 2.4 g |

**Solution de persulfate de sodium :**

| | |
|---|---|
| Eau | 36.0 g |
| Persulfate de sodium | 4.0 g |

**Solution de tensio-actif :**

| | |
|---|---|
| Eau | 23.5 g |
| Sulfate de nonylphénol éthoxylé à 30% dans l'eau | 25.0 g |
| Nonyl phénol éthoxylé à 65% dans l'eau | 3.4 g |

Le latex issu de cet exemple à un extrait-sec de 67.0% et une viscosité Brookfield de 250 mPa.s.

### Exemple 3 : Synthèse de latex bipopulé comparatif en présence d'un amorçage simple : persulfate de sodium

Dans un réacteur en verre double enveloppe muni d'une agitation mécanique de type ancre, sont introduits 207.4 g d'eau, 376.0 g de la semence synthétisée dans l'exemple 1 , 1.20 g de persulfate de sodiumet 27.6 g d'une solution de monomères. Le contenu est porté à 80°C sous agitation. La totalité de la pré émulsion de monomères est introduite en continu dans un temps de 4 h à 80°C, alors que le reste de la solution de persulfate de sodium est introduit en 4h30.
2h30 après le début de la coulée de la pré émulsion de monomères 51.9 g d'une solution de tensio-actif sont ajoutés en batch dans le réacteur

**Solution de monomères et d'amorceur liposoluble :**

| | |
|---|---|
| Méthacrylate de méthyle | 2.2 g |
| Acétate de vinyle | 2.2 g |
| Acrylate de 2-éthyl hexyle | 22.4 g |
| Acide acrylique | 0.8 g |

**Pré émulsion de monomères :**

| | |
|---|---|
| Eau | 168.3 g |
| Sulfate de nonylphénol éthoxylé à 30% dans l'eau | 23.4 g |
| Nonyl phénol éthoxylé à 65% dans l'eau | 14.0 g |
| Méthacrylate de méthyle | 74.6 g |
| Acétate de vinyle | 74.6 g |
| Acrylate de 2-éthyl hexyle | 28.0 g |
| DEAB | 2.4 g |

**Solution de persulfate de sodium :**

| | |
|---|---|
| Eau | 40.5 g |
| Persulfate de sodium | 4.4 g |

**Solution de tensio-actif :**

| | |
|---|---|
| Eau | 23.5 g |
| Sulfate de nonylphénol éthoxylé à 30% dans l'eau | 25.0 g |
| Nonyl phénol éthoxylé à 65% dans l'eau | 3.4 g |

Le latex issu de cet exemple à un extrait-sec de 66.3% et une viscosité Brookfield de 2200 mPa.s.

**Analyse granulométrique**

| Reference | Taille (nm) Petites particules / Grosses particules | Répartition en poids (%) Petites particules / Grosses particules |
|---|---|---|
| Exemple 2 | 124/596 | 22/78 |
| Exemple 3 | 154/632 | 40/60 |

## Revendications

1. Procédé de préparation de latex par la polymérisation en émulsion à une température comprise entre 30 et 90°C d'au moins un monomère éthyléniquement insaturé, en présence d'au moins un tensioactif, d'une semence de particules de polymères de diamètre compris entre 200 et 450 nm représentant de 5 à 25% en poids du poids total monomère et semence, la polymérisation étant amorcée par un système mixte hydrosoluble / liposoluble.

2. Procédé selon la revendication 1, **caractérisé par le fait que** la semence est introduite avant le début de la polymérisation.

3. Procédé selon la revendication 1, **caractérisé par le fait que** la semence est introduite après le début de la polymérisation et avant d'atteindre 80% de conversion des monomères à polymériser.

4. Procédé selon l'une des revendications 1 à 3, **caractérisé par le fait que** la semence est introduite sous la forme d'un latex.

5. Procédé selon l'une des revendications 1 à 3, **caractérisé par le fait que** la semence est introduite sous la forme d'une poudre redispersible.

6. Procédé selon la revendication 1, **caractérisé par le fait que** la semence est préparée in situ par polymérisation en émulsion.

7. Procédé selon l'une quelconque des revendications 1 à 6, **caractérisé par le fait que** la semence est constituée essentiellement de polymères (méth)cryliques.

8. Procédé selon l'une quelconque des revendications 1 à 7, **caractérisé par le fait que** le tensioactif est choisi parmi :
- les tensioactifs anioniques tels que les éthers d'alkylaryle sulfates, les éthers d'alkyle sulfates ;
- les tensioactifs non ioniques tels que les alkyl phénols éthoxylés ou les alcools gras éthoxylés.

9. Procédé selon l'une quelconque des revendications 1 à 8, **caractérisé par le fait que** le système mixte est constitué d'un rapport molaire entre l'amorceur hydrosoluble et l'amorceur liposoluble compris entre 0,01 / 1 et 1 / 0,01.

10. Procédé selon l'une quelconque des revendications 1 à 9, **caractérisé par le fait que** l'amorceur hydrosoluble est choisi parmi :
- les persulfates de sodium, potassium et ammonium ;
- les dérivés azoïques hydrosolubles tels que l'acide 4,4'-azobis-4-cyanovalérique ou le dihydrochlorure 2,2'-azobis-2-amidinopropane par exemple ;
- les systèmes mettant en jeu un réducteur, un oxydant et parfois même un activateur ; les oxydants étant le plus souvent des hydroperoxydes tels que l'eau oxygénée, le ter-butyl hydroperoxyde, le ter-mayl hydroperoxyde, l'hydroperoxyde de cumyle, le sel de sodium du mélange de m- et p-diisopropylbenzène dihydroperoxyde ; les réducteurs les plus couramment employés étant le formaldéhyde sulfoxylate de sodium, le métabisulfite de sodium, l'acide ascorbique : et les activateurs étant le plus souvent des sels métalliques tels que le sulfate de fer, le sulfate de cuivre ou l'acétate de cobalt.

11. Procédé selon l'une quelconque des revendications 1 à 10, **caractérisé par le fait que** l'amorceur liposoluble est choisi parmi les peroxydes et hydroperoxydes insolubles dans l'eau, de peroxyesters, de peroxydicarbonates ou encore de dérivés azoïques liposolubles tels que l'azobisisobutyronitrile, l'azobiisobutyrodiméthyl ester ou l'azobiisobutyrodiéthyl ester.

## Patentansprüche

1. Verfahren zur Herstellung von Latex durch Emulsionspolymerisation mindestens eines ethylenisch ungesättigten Monomers bei einer Temperatur zwischen 30 und 90°C in Gegenwart mindestens eines Tensids und von Keimen von Polymerteilchen mit einem Durchmesser zwischen 200 und 450 nm, die 5 bis 25 Gew.-% bezogen auf das Gesamtgewicht von Monomer und Keimen ausmachen, wobei die Polymerisation durch ein gemischtes wasserlösliches/öllösliches System gestartet wird.

2. Verfahren nach Anspruch 1, **dadurch gekennzeichnet, dass** die Keime vor Beginn der Polymerisation eingebracht werden.

3. Verfahren nach Anspruch 1, **dadurch gekennzeichnet, dass** die Keime nach Beginn der Polymerisation und bevor eine 80%ige Umwandlung der zu polymerisierenden Monomere erreicht ist eingebracht werden.

4. Verfahren nach einem der Ansprüche 1 bis 3, **dadurch gekennzeichnet, dass** die Keime in Form eines Latex eingebracht werden.

5. Verfahren nach einem der Ansprüche 1 bis 3, **dadurch gekennzeichnet, dass** die Keime in Form eines redispergierbaren Pulvers eingebracht werden.

6. Verfahren nach Anspruch 1, **dadurch gekennzeichnet, dass** die Keime durch Emulsionspolymerisation in situ hergestellt werden.

7. Verfahren nach einem der Ansprüche 1 bis 6, **dadurch gekennzeichnet, dass** die Keime im Wesentlichen aus (Meth)acrylmonomeren bestehen.

8. Verfahren nach einem der Ansprüche 1 bis 7, **dadurch gekennzeichnet, dass** das Tensid ausgewählt ist aus:
- anionischen Tensiden, wie Alkylarylethersulfaten, Alkylethersulfaten;
- nichtionischen Tensiden, wie Ethoxyalkylphenolen oder Ethoxyfettalkoholen.

9. Verfahren nach einem der Ansprüche 1 bis 8, **dadurch gekennzeichnet, dass** das gemischte System ein Molverhältnis zwischen dem wasserlöslichen Initiator und dem öllöslichen Initiator zwischen 0,01/1 und 1/0,01 umfasst.

10. Verfahren nach einem der Ansprüche 1 bis 9, **dadurch gekennzeichnet, dass** der wasserlösliche Initiator ausgewählt ist aus:
- Natrium-, Kalium- und Ammoniumpersulfat;
- wasserlöslichen Azoderivaten, wie beispielsweise 4,4'-Azobis-4-cyanovaleriansäure oder 2,2'-Azobis-2-amidinopropandihydrochlorid;
- Systemen, die ein Reduktionsmittel, ein Oxidationsmittel und gegebenenfalls auch einen Aktivator verwenden, wobei die Oxidationsmittel am häufigsten Hydroperoxide, wie Wasserstoffperoxid, tert.-Butylhydroperoxid, tert.-Amylhydroperoxid, Cumylhydroperoxid, das Natriumsalz der Mischung von m- und p-Diisopropylbenzoldihydroperoxid sind, die am häufigsten eingesetzten Reduktionsmittel Natriumformaldehydsulfoxylat, Natriummetabisulfit, Ascorbinsäure sind und die Aktivatoren am häufigsten Metallsalze, wie Eisensulfat, Kupfersulfat oder Kobaltacetat, sind.

11. Verfahren nach einem der Ansprüche 1 bis 10, **dadurch gekennzeichnet, dass** der öllösliche Initiator aus in Wasser unlöslichen Peroxiden und Hydroperoxiden, Peroxyestern, Peroxydicarbonaten oder auch öllöslichen Azoderivaten, wie Azobisisobutyronitril, Azo-bisisobutyrodimethylester oder Azobisisobutyrodi-ethylester, ausgewählt ist.

## Claims

1. Process for the preparation of a latex by the emulsion polymerization at a temperature of between 30 and 90°C of at least one ethylenically unsaturated monomer in the presence of at least one surfactant and of a seed of polymer particles with a diameter of between 200 and 450 nm representing from 5 to 25% by weight of the total weight of monomer and seed, the polymerization being initiated by a mixed system of water-soluble/fat-soluble initiators.

2. Process according to Claim 1, **characterized in that** the seed is introduced before the beginning of the polymerization.

3. Process according to Claim 1, **characterized in that** the seed is introduced after the beginning of the polymerization and before achieving 80% conversion of the monomers to be polymerized.

4. Process according to one of Claims 1 to 3, **characterized in that** the seed is introduced in the form of a latex.

5. Process according to one of Claims 1 to 3, **characterized in that** the seed is introduced in the form of a redispersible powder.

6. Process according to Claim 1, **characterized in that** the seed is prepared in situ by emulsion polymerization.

7. Process according to any one of Claims 1 to 6, **characterized in that** the seed is composed essentially of (meth)acrylic polymers.

8. Process according to any one of Claims 1 to 7, **characterized in that** the surfactant is chosen from:
- anionic surfactants, such as alkylaryl ether sulphates or alkyl ether sulphates;
- nonionic surfactants, such as ethoxylated alkylphenols or ethoxylated fatty alcohols.

9. Process according to any one of Claims 1 to 8, **characterized in that** the mixed system is composed of a molar ratio of the water-soluble initiator to the fat-soluble initiator of between 0.01/1 and 1/0.01.

10. Process according to any one of Claims 1 to 9, **characterized in that** the water-soluble initiator is chosen from:
- sodium, potassium and ammonium persulphates;
- water-soluble azo derivatives, such as 4,4'-azobis(4-cyanovaleric acid) or 2,2'-azobis(2-amidinopropane) dihydrochloride, for example;
- the systems involving a reducing agent, an oxidizing agent and sometimes even an activating agent; the oxidizing agents generally being hydroperoxides, such as aqueous hydrogen peroxide solution, tert-butyl hydroperoxide, tert-amyl hydroperoxide, cumyl hydroperoxide or the sodium salt of the mixture of m- and p-diisopropylbenzene dihydroperoxide; the most commonly employed reducing agents being sodium formaldehydesulphoxylate, sodium metabisulphite or ascorbic acid; and the activating agents generally being metal salts, such as iron sulphate, copper sulphate or cobalt acetate.

11. Process according to any one of Claims 1 to 10, **characterized in that** the fat-soluble initiator is chosen from peroxides and hydroperoxides which are insoluble in water, peroxyesters, peroxydicarbonates or fat-soluble azo derivatives, such as azobisisobutyronitrile, azobisisobutyrodimethyl ester or azobisisobutyrodiethyl ester.
